# EUROPÄISCHE PATENTANMELDUNG

(11) **EP 3 045 986 A1**
(43) Veröffentlichungstag der Anmeldung: **20.07.2016**
(21) Anmeldenummer: 15151290.2
(22) Anmeldetag: 15.01.2015
(51) Int. Cl.: G05B 19/042, G06F 21/12

(54) **Fertigungsmaschine mit Eigenfunktionalitätsprüfung und Verfahren**

(71) Anmelder: Siemens Aktiengesellschaft, 80333 München (DE)
(72) Erfinder: Distler, Heinz, 92348 Berg OT Langenthal (DE); Rosenbaum, Björn, 91056 Erlangen (DE)

(57) **Zusammenfassung**

Eine Fertigungsmaschine soll flexibler genutzt werden können. Hierzu wird eine Fertigungsmaschine (1) mit einer Eingabeeinrichtung (4) zum Eingeben von Fertigungsparametern bezüglich eines zu fertigenden Werkstücks vorgeschlagen. Die Fertigungsmaschine besitzt eine Analyseeinrichtung (5) zum Ermitteln einer Anforderung an die Fertigungsmaschine (1) anhand der Fertigungsparameter. Außerdem verfügt sie über eine Prüfeinrichtung (6) zum Überprüfen, ob die Fertigungsmaschine über eine Funktionalität verfügt, um die Anforderung zu erfüllen. Eine Bereitstellungseinrichtung (7) stellt schließlich eine Steuerungsdatei für die Funktionalität für die Fertigungsmaschine in Abhängigkeit von vorgegebenen Autorisierungsdaten bereit, wenn die Fertigungsmaschine über die Funktionalität nicht verfügt hat.

## Beschreibung

Die vorliegende Erfindung betrifft eine Fertigungsmaschine mit einer Eingabeeinrichtung zum Eingeben von Fertigungsparametern bezüglich eines zu fertigenden Werkstücks. Darüber hinaus betrifft die vorliegende Erfindung ein Verfahren zum Betreiben einer solchen Fertigungsmaschine.

Unter dem Begriff "Fertigungsmaschine" wird hier jede Maschine verstanden, die einen Fertigungs- oder Produktionsprozess selbständig ausführt oder zumindest in einen solchen eingebunden ist. Ein typisches Beispiel einer solchen Fertigungsmaschine wäre eine Werkzeugmaschine, mit der Werkstücke mithilfe eines oder mehrerer Werkzeuge bearbeitet werden. Darunter ist beispielsweise eine Drehmaschine, eine Fräsmaschine oder dergleichen zu verstehen.

Darüber hinaus können sich Fertigungsmaschinen auch auf Maschinen beziehen, welche lediglich automatisiert Bewegungen ausführen. Darunter fallen beispielsweise Roboter, die mechanische Arbeit leisten und von Steuerungsprogrammen gesteuert werden. Ebenso kann eine Anlage, welche einen Verbund von mehreren Geräten darstellt, als Fertigungsmaschine gesehen werden. Auch eine solche Anlage wird typischerweise mit einem Steuerungsprogramm angesteuert, um z. B. automatisiert eine Fertigung vorzunehmen.

Die Qualität, Funktionalität und Leistungsfähigkeit von Fertigungsmaschinen wird zunehmend durch ihre SteuerungsSoftware bestimmt. Obwohl Software in immer kürzeren Entwicklungszyklen neu- bzw. weiterentwickelt wird, können Maschinen heute davon oft keinen erweiterten Nutzen ziehen.

Viele Fertigungsmaschinen sind so genannte "CNC-Maschinen" (Computerized Numerical Control). Diese Maschinen werden durch ein Maschinenprogramm bzw. CNC-Programm gesteuert. Derartige Maschinenprogramme sind in der Regel herstellerspezifisch.

Der Entwurf von Werkstücken erfolgt typischerweise mithilfe von CAD-Programmen. CAM-Systeme zur rechnergestützten Fertigung wandeln die Daten eines CAD-Entwurfs unter Berücksichtigung spezifischer Werkzeuge, Drehzahlen, Vorschübe und dergleichen in zumeist standardisierte CNC-Programme. In der Regel ist noch ein Postprozessor notwendig, um ein solches CNC-Programm in die spezifische Form zu bringen, die eine konkrete Fertigungsmaschine benötigt. Die vorliegende Erfindung betrifft jedoch nicht die Arbeitsvorbereitung mittels der CAM-Systeme, sondern die Fertigungsmaschine bzw. Werkzeugmaschine selbst.

CNC-Programme sind häufig sehr vielschichtig. Die einzelnen Fertigungsaufgaben können mit unterschiedlichen Funktionen der Steuerungssoftware realisiert werden. Daher sind in manchen CNC-Programmen Funktionsaufrufe enthalten, die separat freigeschaltet werden müssen. Zudem kann die Steuerungssoftware auch mittels Datenträger hochgerüstet werden. Dies ist insbesondere im Rahmen eines so genannten Retrofit vorteilhaft, wenn nämlich ältere Maschinen mit einer neueren Automatisierungssoftware versehen werden sollen.

Die Aufgabe der vorliegenden Erfindung besteht darin, eine Fertigungsmaschine bereitzustellen, die flexibler einsetzbar ist. Darüber hinaus soll ein entsprechendes Verfahren zum Betreiben einer solchen Fertigungsmaschine vorgeschlagen werden.

Erfindungsgemäß wird diese Aufgabe gelöst durch eine Fertigungsmaschine mit
- einer Eingabeeinrichtung zum Eingeben von Fertigungsparametern bezüglich eines zu fertigenden Werkstücks,
- einer Analyseeinrichtung zum Ermitteln einer Anforderung an die Fertigungsmaschine anhand der Fertigungsparameter,
- einer Prüfeinrichtung zum Überprüfen, ob die Fertigungsmaschine über eine Funktionalität verfügt, um die Anforderung zu erfüllen, und
- einer Bereitstellungseinrichtung zum Bereitstellen einer Steuerungsdatei für die Funktionalität für die Fertigungsmaschine in Abhängigkeit von vorgegebenen Autorisierungsdaten, wenn die Fertigungsmaschine über die Funktionalität nicht verfügt hat.

Darüber hinaus wird erfindungsgemäß bereitgestellt ein Verfahren zum Betreiben einer Fertigungsmaschine durch
- Eingeben von Fertigungsparametern bezüglich eines zu fertigenden Werkstücks,
- Ermitteln einer Anforderung an die Fertigungsmaschine anhand der Fertigungsparameter,
- Überprüfen, ob die Fertigungsmaschine über eine Funktionalität verfügt, um die Anforderung zu erfüllen, und
- Bereitstellen einer Steuerungsdatei für die Funktionalität für die Fertigungsmaschine in Abhängigkeit von vorgegebenen Autorisierungsdaten, wenn die Fertigungsmaschine über die Funktionalität nicht verfügt hat.

In vorteilhafter Weise kann sich die Fertigungsmaschine also selbst analysieren und dementsprechend ermitteln, ob sie für das zu fertigende Werkstück ausreichend ausgestattet ist. Insbesondere kann die Fertigungsmaschine aus den Fertigungsparametern selbst ermitteln, ob sie eine oder mehrere Anforderungen, die zur Fertigung des Werkstücks notwendig sind, erfüllt. Dazu muss sie zunächst prüfen, welche Anforderung überhaupt notwendig ist bzw. welche Anforderungen notwendig sind und anschließend, ob sie über eine oder mehrere Funktionalitäten verfügt, mit denen die Anforderung bzw. Anforderungen erfüllbar sind. Falls sie nun selbst erkennt, dass ihr eine Funktionalität fehlt, um die gewünschte Anforderung zu erfüllen, wird durch eine Bereitstellungseinrichtung eine Steuerdatei bereitgestellt, mit der diese Funktionalität an der Fertigungsmaschine realisierbar ist. Die Bereitstellung erfolgt aber nur dann, wenn eine entsprechende Autorisierung vorliegt, d. h. vorgegebene Autorisierungsdaten vorliegen. Somit wird die Fertigungsmaschine bei Bedarf und entsprechender Autorisierung mit der notwendigen Funktionalität bzw. den notwendigen Funktionalitäten ausgestattet.

In einer Ausführungsvariante kann die Bereitstellungseinrichtung dazu ausgelegt sein, die Steuerungsdatei für die Funktionalität dauerhaft zu speichern und durch Freischalten bereitzustellen. Die in die Fertigungsmaschine integrierte Bereitstellungseinrichtung besitzt also einen Speicher, in der die entsprechende Steuerungsdatei dauerhaft abgespeichert ist. Das Freischalten einer gewünschten Funktionalität erfolgt aber nur dann, wenn entsprechende Autorisierungsdaten vorliegen. Beispielsweise kann bei einem Maschinenhersteller ein entsprechender Autorisierungscode gekauft werden, sodass die gewünschte Funktionalität oder mehrere Funktionalitäten freigeschaltet werden können.

Alternativ kann die Bereitstellungseinrichtung auch dazu ausgelegt sein, die Steuerungsdatei für die eine Funktionalität von einer Speichereinrichtung, die sich außerhalb der Fertigungsmaschine befindet, zu laden, vorübergehend zu speichern und vorübergehend bereitzustellen. Dies kann beispielsweise dadurch realisiert werden, dass die Funktionalität von einem externen Datenträger oder vom Internet auf die Fertigungsmaschine geladen wird und abhängig von einem weiteren Kriterium vorübergehend bereitgestellt wird. Die jeweilige Funktionalität bzw. die Funktionalitäten stehen dann nicht dauerhaft zur Verfügung.

Gemäß einer Weiterbildung ist die Bereitstellungseinrichtung speziell dazu ausgelegt, die Steuerungsdatei für eine vorbestimmte Zeitdauer bereitzustellen. So kann beispielsweise die Lizenz für eine Funktionalität für einen Zeitraum von einem Monat erworben werden. Für den Nutzer ist dann die jeweilige Funktionalität für die Zeitdauer von einem Monat freigeschaltet. Er erhält dazu einen entsprechenden einmaligen Code oder erhält dafür beispielsweise täglich Autorisierungsdaten online.

Gemäß einer anderen Ausführungsform ist die Bereitstellungseinrichtung ausgelegt, die Steuerungsdaten für eine vorbestimmte Anzahl an Nutzzyklen bereitzustellen. Ein Nutzzyklus entspricht dabei beispielsweise der Fertigung eines Werkstücks. Ein Nutzzyklus kann aber auch einer Fertigung von beispielsweise 100 Werkstücken oder einer beliebigen anderen Anzahl an Werkstücken entsprechen. So kann die Nutzung einer bestimmten Funktionalität auf eine vorbestimmte Anzahl an Werkstücken bzw. Produkten begrenzt werden. Für die Fertigung weiterer Werkstücke kann dann eine weitere Lizenz erworben werden.

Die Bereitstellungseinrichtung kann aber auch dazu ausgelegt sein, eine Anzahl an Nutzzyklen zu zählen, die repräsentiert, wie oft die Steuerungsdatei ab einem vorgegebenen Startpunkt benutzt wurde, und die Steuerungsdatei dann nach Erreichen einer vorgegebenen Höchstzahl zu deaktivieren. Damit kann beispielsweise eine Steuerungsdatei auf Bedarf vom Internet heruntergeladen werden einschließlich einer begrenzten Lizenz, und die Steuerungsdatei wird nach Erreichen einer korrespondierenden Höchstzahl an Nutzzyklen, die wie oben zu verstehen sind, automatisch deaktiviert. Dieses Deaktivieren kann beispielsweise dadurch erfolgen, dass die Steuerungsdatei automatisch gelöscht oder deinstalliert wird.

Gemäß einer anderen Ausgestaltung besitzt die Eingabeeinrichtung eine Sende-Empfangs-Einheit zum drahtlosen Auslesen eines RFID-Elements. Damit ist es beispielsweise möglich, dass ein Werkstück, welches mit einem RFID-Chip versehen ist, automatisch seine Fertigungsparameter an die Fertigungsmaschine übermittelt.

Die Prüfeinrichtung kann ein Modell der Fertigungsmaschine aufweisen. Hierdurch ist es möglich, dass die Fertigungsmaschine einen Fertigungsprozess simuliert, bevor er in der Realität ausgeführt wird. Somit lässt sich leicht feststellen, ob die Fertigungsmaschine über die entsprechende Funktionalität bzw. die entsprechenden Funktionalitäten verfügt, die zur Fertigung eines gewünschten Werkstücks notwendig sind.

Die Prüfeinrichtung kann außerdem zum automatischen Aktualisieren des Modells ausgebildet sein. Dies hätte den Vorteil, dass Updates automatisch auf die Fertigungsmaschine geladen werden, sobald sie verfügbar sind. Die Fertigungsmaschine würde somit stets über das aktuellste Modell für die Simulation verfügen.

Die oben geschilderten Merkmale bilden nicht nur die erfindungsgemäße Fertigungsmaschine weiter, sondern auch das erfindungsgemäße Verfahren. Aus den Funktionen der Fertigungsmaschine ergeben sich nämlich die entsprechenden Verfahrensschritte.

Die vorliegende Erfindung wird nun anhand der beigefügten Zeichnungen erläutert, in denen zeigen:
- FIG 1: einen prinzipiellen Aufbau einer erfindungsgemäßen Fertigungsmaschine und
- FIG 2: ein Ablaufdiagramm eines erfindungsgemäßen Verfahrens.

Die nachfolgend näher geschilderten Ausführungsbeispiele stellen bevorzugte Ausführungsformen der vorliegenden Erfindung dar. Dabei ist zu beachten, dass die jeweils geschilderten Merkmale nicht nur in den angeführten Kombinationen, sondern auch in Alleinstellung oder in anderen, technisch sinnvollen Kombinationen realisiert werden können.

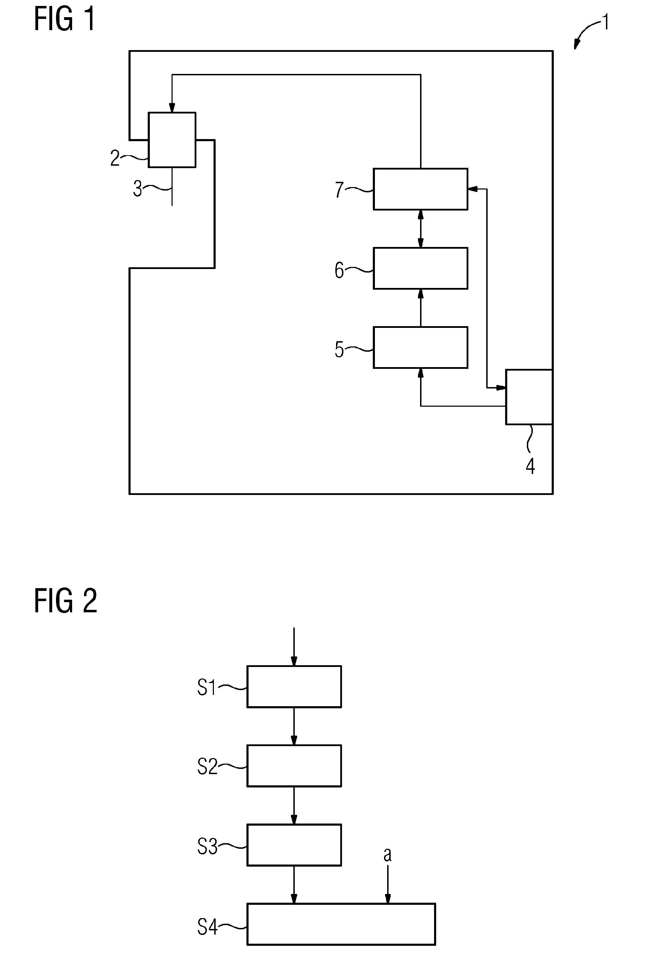

In dem Beispiel von FIG 1 ist eine Fräsmaschine als Fertigungsmaschine 1 dargestellt. Sie besitzt hier eine Spindel 2 mit einem Werkzeug 3. Die Fertigungsmaschine 1 kann aber auch jede andere Maschine sein, mit der Produkte gefertigt werden können. So kann es sich beispielsweise um eine Drehmaschine, eine Spritzgussmaschine, einen Roboter oder eine andere Maschine handeln. Eine derartige Fertigungsmaschinen besitzt eine Datenverarbeitungseinrichtung, die der Übersicht halber in FIG 1 nicht dargestellt ist, und die ein Maschinenprogramm (CNC-Programm) abarbeiten und andere Daten verarbeiten kann.

In dem Beispiel von FIG 1 besitzt die Fertigungsmaschine 1 eine Eingabeeinrichtung 4, in die Fertigungsparameter eingegeben werden können. Bei diesen Fertigungsparametern handelt es sich beispielsweise um Daten von einem CAM-System, mit denen die Fertigungsmaschine 1 angesteuert wird. Dementsprechend kann die Eingabeeinrichtung 4 eine Schnittstelle besitzen, mit der sie an einen externen Rechner, an ein Datennetzwerk oder an einen Datenträger angeschlossen werden kann. Diese Daten können bereits so verarbeitet sein, dass sie direkt von der Fertigungsmaschine 1 zur Steuerung eingesetzt werden können. Gegebenenfalls erfolgt eine weitere Verarbeitung mittels eines Postprozessors.

Alternativ oder zusätzlich kann die Eingabeeinrichtung 4 über eine Mensch-Maschine-Schnittstelle verfügen, über die eine so genannte HMI-Eingabe möglich ist. Damit kann ein Nutzer manuelle Fertigungsparameter eingeben. Weiterhin, alternativ oder zusätzlich kann die Eingabeeinrichtung 4 über eine Leseeinheit verfügen, mit der sie beispielsweise automatisch aus einem Werkstück Fertigungsparameter ausliest. Dies kann z. B. dadurch realisiert sein, dass ein Werkstück mit einem RFID-Chip versehen wird, auf dem die Fertigungsparameter geladen sind, und die Eingabeeinrichtung 4 liest diesen RFID-Chip automatisch aus, um die Fertigungsparameter für die Steuerung der Fertigungsmaschine zu nutzen.

An die Eingabeeinrichtung 4 ist eine Analyseeinrichtung 5 der Fertigungsmaschine angeschlossen. Mit der Analyseeinrichtung 5 kann die Fertigungsmaschine diejenigen Fertigungsparameter analysieren, die über die Eingabeeinrichtung 4 automatisch oder manuell eingegeben wurden. Dabei ermittelt die Analyseeinrichtung 5, ob sich aus den Fertigungsparametern eine oder mehrere bestimmte Anforderungen an die Fertigungsmaschine 1 ergeben. Beispielsweise weisen die Fertigungsparameter darauf hin, dass an die Oberfläche des Werkstücks eine besondere Anforderung hinsichtlich Toleranz gestellt wird. Eine andere Anforderung kann darin bestehen, dass eine bestimmte Höchstdauer für eine Fertigung eines Werkstücks eingehalten wird. Auch dies kann sich in den Fertigungsparametern wiederspiegeln.

An die Analyseeinrichtung 5 ist eine Prüfeinrichtung 6 angeschlossen. Diese Prüfeinrichtung 6 hat die Aufgabe, zu prüfen, ob eine Funktionalität in der Fertigungsmaschine 1 vorhanden ist, die notwendig ist, um die Anforderung, welche von der Analyseeinrichtung 5 ermittelt wurde, zu erfüllen. Es kann auch notwendig sein, dass die Prüfeinrichtung 6 zu prüfen hat, ob die Anforderung durch mehrere Funktionalitäten, über die die Fertigungsmaschine verfügt, erfüllt werden kann. Dies bedeutet, dass die Fertigungsmaschine 1 mit der Prüfeinrichtung 6 automatisch eine vorhandene oder eine fehlende Funktionalität erkennen kann.

Im Zuge des Ermittelns einer Anforderung und des Überprüfens, ob die Fertigungsmaschine über eine Funktionalität verfügt, kann sich die Fertigungsmaschine eines so genannten Modell-Checkers bedienen. Dieser überprüft mithilfe eines virtuellen Maschinenmodells (z. B. 3D-Modell der Maschine und/oder des Werkstücks), ob durch Simulation der implementierten Funktionalitäten das geforderte Werkstück erstellt werden kann. Die Analyseeinrichtung 5 und die Prüfeinrichtung 6 können aber auch einen so genannten Feature-Check im Hinblick auf die implementierten Strategien durchführen. Dies bedeutet, dass überprüft werden muss, ob den ermittelten Anforderungen auch die benötigten Funktionen zugeordnet werden können. Als Funktionen bzw. Funktionalitäten sind hier beispielsweise Bearbeitungszyklen zu sehen, mit denen z. B. Nuten, Taschen, Phasen oder dergleichen gefräst werden können. Funktionen können aber auch beispielsweise Interpolations- oder Kompensationsstrategien sein. Ist also beispielsweise eine bestimmte Oberflächengüte gefordert (Anforderung), so kann dies unter Umständen nicht durch Fräsbearbeitung, sondern nur durch Schleifbearbeitung (Bearbeitungszyklus) erfolgen, und eventuell nur bei geänderten Interpolations- oder Regelparametern (Interpolationsstrategie).

Im Rahmen der Analyse und Überprüfung durch die Einrichtungen 5 und 6 kann außerdem ein Quercheck von Standarddatensätzen und Versionen erfolgen. Insbesondere kann ein Abgleich mit aktuellen Datenbanken erfolgen. Für nachträglich aktivierte Funktionen kann es vorkommen, dass die Parametrierung nicht korrekt ist und mit Standardeinstellungen gearbeitet werden würde. Im Rahmen des Querchecks kann dann ein Hinweis an den Nutzer erfolgen, dass die Maschine mit den vorgenommenen Einstellungen die Erwartungshaltung nicht erfüllen kann, da die Oberfläche beispielsweise nicht glatt genug wird. Dementsprechend kann der Nutzer dann andere Funktionalitäten bzw. Steuerungsdaten für solche andere Funktionalitäten in die Maschine nachladen oder dort aktivieren.

Um zu überprüfen, ob die Fertigungsmaschine 1 die notwendige Funktionalität bzw. die notwendigen Funktionalitäten besitzt, greift sie auf eine Bereitstellungseinrichtung 7 zu, in der die Steuerungsdateien für die Funktionalitäten gespeichert sind. Falls die Prüfeinrichtung 6 feststellt, dass eine Funktionalität in der Bereitstellungseinrichtung 7 vorhanden ist, wird diese die Funktion beispielsweise für den Antrieb (im Beispiel von FIG 1 die Spindel 2) bereitstellen. Vorzugsweise wird diese Bereitstellung aber davon abhängig gemacht, ob eine entsprechende Berechtigung vorliegt. Dies ist nur dann der Fall, wenn entsprechende Autorisierungsdaten eine solche Berechtigung repräsentieren. Beispielsweise kann ein korrespondierendes Berechtigungsbit gesetzt sein. Dies kann beispielsweise dadurch geschehen, dass ein Nutzer die Fertigungsmaschine mit gewissen Funktionalitäten kauft und die entsprechenden Berechtigungsbits daher werksseitig gesetzt wurden. Alternativ können die Autorisierungsdaten auch einen Autorisierungscode umfassen, der gegebenenfalls nach der Auslieferung der Maschine in diese manuell oder mit einer anderen Datenübertragungstechnik eingegeben wird. Die Überprüfung der Autorisierung erfolgt auch in diesem Fall maschinenintern.

Alternativ kann die Autorisierung auch außerhalb der Fertigungsmaschine 1 überprüft werden, beispielsweise indem die Bezahlung eines Softwarepakets überprüft wird. Bei festgestellter Berechtigung kann der Nutzer dann die Software beispielsweise vom Internet herunterladen und auf die Fertigungsmaschine 1 laden.

Bei entsprechend hohem Automatisierungsgrad löst die Prüfeinrichtung 6 bzw. die Bereitstellungseinrichtung 7 automatisch z. B. über die Eingabeeinrichtung 4, welche dann eine geeignete Schnittstelle darstellt, einen Software-Download aus. Dies kann beispielsweise über einen Cloud-Service erfolgen.

Zur Speicherung der empfangenen Software (Steuerungsdateien bzw. Steuerungsparameter) verfügt die Fertigungsmaschine über einen entsprechenden Speicher gegebenenfalls in der Bereitstellungseinrichtung 7 und vorzugsweise über eine Standard-Schnittstelle (Open Architecture) zur Integration der neuen Software. Anschließend kann eine separate Aktivierung der Software erfolgen. Ein solcher Aktivierungsschritt muss aber nicht notwendig sein.

Vorzugsweise wird die Deaktivierung bzw. Löschung der Steuerungsdateien bzw. Parameter auch in Abhängigkeit von Autorisierungsdaten durchgeführt. Insbesondere kann es gewünscht sein, die Software nur für einen bestimmten Zeitraum zur Verfügung zu stellen. In diesem Fall erfolgt die Deaktivierung bzw. Löschung der betroffenen Software automatisch nach einem gewissen Zeitraum. Eine Deaktivierung oder Löschung kann aber auch nach einer vorbestimmten Anzahl an Nutzungszyklen erfolgen, wenn beispielsweise mit der Fertigungsmaschine 1 hundert Einheiten (oder eine beliebige andere Anzahl) gefertigt oder gehandhabt wurden.

Ein Ausführungsbeispiel eines erfindungsgemäßen Verfahrens ist in FIG 2 wiedergegeben. Dementsprechend werden in einem Schritt S1 Fertigungsparameter bezüglich eines zu fertigenden Werkstücks in die Fertigungsmaschine eingegeben, wie dies im Zusammenhang mit der Eingabeeinrichtung 4 erläutert wurde. In einem nachfolgenden Schritt S2 wird eine Anforderung an die Fertigungsmaschine 1 anhand der Fertigungsparameter ermittelt, und zwar wie dies oben im Zusammenhang mit der Analyseeinrichtung 5 geschehen ist. In dem folgenden Schritt S3 wird überprüft, ob die Fertigungsmaschine über eine Funktionalität verfügt, um die Anforderung zu erfüllen. Eine solche Überprüfung ist oben im Detail im Zusammenhang mit der Prüfeinrichtung 6 erläutert. Schließlich erfolgt ein Bereitstellen einer Steuerungsdatei für die Funktionalität für die Fertigungsmaschine in Abhängigkeit von vorgegebenen Autorisierungsdaten, wenn die Fertigungsmaschine über die Funktionalität nicht verfügt hat, was Schritt S4 andeutet. Dazu benötigt der Schritt S4 nicht nur die fragliche Funktionalität von Schritt S3, sondern auch die oben im Detail beschriebenen Autorisierungsdaten a. Weitere Details zum Verfahren ergeben sich aus dem Beispiel von FIG 1.

In einer konkreten Ausgestaltung wird beispielsweise eine Drehmaschine mit Standardmotoren ausgerüstet. Auf der Maschine soll ein Drehteil mit hoher Oberflächengüte gefertigt werden. Die Drehmomentwelligkeit der Standardmotoren ist dafür nicht ausreichend gut. Es gibt jedoch eine neue Software zur Kompensation von Drehmomentwelligkeit. Diese Software wird über einen Cloud-basierten Service in die Maschine geladen und im finalen Arbeitsschritt aktiviert. Danach könnte die Software automatisch wieder deaktiviert und nur die Nutzung in Rechnung gestellt werden.

In vorteilhafter Weise ist es durch die Erfindung also möglich, Weiter- bzw. Neuentwicklungen zu nutzen, die zum Zeitpunkt der Auslieferung der Maschine noch nicht existiert haben. Ebenso wird ein Update/Upgrate von Maschinen (Firmware, Embedded Software, Funktionen) möglich. Der große Vorteil besteht jedoch darin, dass die Fertigungsmaschine selbst überprüft, ob zur Erfüllung der gewünschten Anforderungen zusätzliche oder andere Software notwendig ist oder nicht. Dies kann letztlich auch dazu genutzt werden, um so genannten "pay per use" Dienste zu unterstützen.

## Patentansprüche

1. Fertigungsmaschine (1) mit
- einer Eingabeeinrichtung (4) zum Eingeben von Fertigungsparametern bezüglich eines zu fertigenden Werkstücks,
**gekennzeichnet durch**
- eine Analyseeinrichtung (5) zum Ermitteln einer Anforderung an die Fertigungsmaschine (1) anhand der Fertigungsparameter,
- eine Prüfeinrichtung (6) zum Überprüfen, ob die Fertigungsmaschine (1) über eine Funktionalität verfügt, um die Anforderung zu erfüllen, und
- eine Bereitstellungseinrichtung (7) zum Bereitstellen einer Steuerungsdatei für die Funktionalität für die Fertigungsmaschine (1) in Abhängigkeit von vorgegebenen Autorisierungsdaten, wenn die Fertigungsmaschine (1) über die Funktionalität nicht verfügt hat.

2. Fertigungsmaschine nach Anspruch 1, wobei die Bereitstellungseinrichtung (7) dazu ausgelegt ist, die Steuerungsdatei für die Funktionalität dauerhaft zu speichern und durch Freischalten bereitzustellen.

3. Fertigungsmaschine nach Anspruch 1, wobei die Bereitstellungseinrichtung (7) dazu ausgelegt ist, die Steuerungsdatei für die Funktionalität von einer Speichereinrichtung, die sich außerhalb der Fertigungsmaschine (1) befindet, zu laden, vorübergehend zu speichern und vorübergehend bereitzustellen.

4. Fertigungsmaschine nach Anspruch 3, wobei die Bereitstellungseinrichtung (7) dazu ausgelegt ist, die Steuerungsdatei für eine vorbestimmte Zeitdauer bereitzustellen.

5. Fertigungsmaschine nach Anspruch 3, wobei die Bereitstellungseinrichtung (7) dazu ausgelegt ist, die Steuerungsdatei für eine vorbestimmte Anzahl an Nutzzyklen bereitzustellen.

6. Fertigungsmaschine nach Anspruch 3, wobei die Bereitstellungseinrichtung (7) dazu ausgelegt ist, eine Anzahl an Nutzzyklen zu zählen, die repräsentiert, wie oft die Steuerungsdatei ab einem vorgegebenen Startpunkt benutzt wurde, und die Steuerungsdatei nach Erreichen einer vorgegebenen Höchstzahl zu deaktivieren.

7. Fertigungsmaschine nach einem der vorhergehenden Ansprüche, wobei die Eingabeeinrichtung (4) eine Sende-Empfangseinheit zum drahtlosen Auslesen eines RFID-Elements aufweist.

8. Fertigungsmaschine nach einem der vorhergehenden Ansprüche, wobei die Prüfeinrichtung (6) ein Modell der Fertigungsmaschine (1) aufweist.

9. Fertigungsmaschine nach Anspruch 8, wobei die Prüfeinrichtung (6) zum automatischen Aktualisieren des Modells ausgebildet ist.

10. Verfahren zum Betreiben einer Fertigungsmaschine (1) durch
- Eingeben von Fertigungsparametern bezüglich eines zu fertigenden Werkstücks,
**gekennzeichnet durch**
- Ermitteln einer Anforderung an die Fertigungsmaschine (1) anhand der Fertigungsparameter,
- Überprüfen, ob die Fertigungsmaschine (1) über eine Funktionalität verfügt, um die Anforderung zu erfüllen, und
- Bereitstellen einer Steuerungsdatei für die Funktionalität für die Fertigungsmaschine (1) in Abhängigkeit von vorgegebenen Autorisierungsdaten, wenn die Fertigungsmaschine (1) über die Funktionalität nicht verfügt hat.
